# EUROPÄISCHE PATENTSCHRIFT

(11) **EP 4 680 364 B1**
(45) Veröffentlichungstag und Bekanntmachung des Hinweises auf die Patenterteilung: **09.12.2026**
(21) Anmeldenummer: 25715188.6
(22) Anmeldetag: 21.03.2025
(51) Int. Cl.: B01D 45/08

(54) **FARBNEBELABSCHEIDEVORRICHTUNG**
PAINT MIST SEPARATING DEVICE
DISPOSITIF DE SÉPARATION DE BROUILLARD DE PEINTURE

(30) Priorität: 22.03.2024 DE 202024101459 U
(43) Veröffentlichungstag der Anmeldung: 21.01.2026
(73) Patentinhaber: Neufilter GmbH, Gronau, 48599 Gronau (DE)
(72) Erfinder: BOEING, Thomas, 48599 Gronau (DE); HERLINGER, Florian, 48599 Gronau (DE); HENKE, Daniel, 48599 Gronau (DE)
(74) Vertreter: Werner & ten Brink PAe PartGes mbB Bentheim
(86) Internationale Anmeldenummer: PCT/EP2025/057760
(87) Internationale Veröffentlichungsnummer: WO 2025/196251

(56) Entgegenhaltungen:
- CN-U- 209 985 061
- CN-U- 211 215 840
- DE-B3- 102021 114 983
- DE-U1- 202021 102 947
- DE-U1- 202022 101 219
- DE-U1- 202022 105 863

## Beschreibung

Die hier vorgeschlagene Neuerung betrifft das technische Gebiet des Abscheidens von mit einem Luftstrom (Rohgasstrom) mitgeführten Partikeln, insbesondere Farbpartikeln, insbesondere das Abscheiden von mit einem sogenannten Farbnebel oder dergleichen, also einem Rohgasstrom, mitgeführten Farb- oder Lackpartikeln oder dergleichen (Farbnebelabscheidung).

Vorrichtungen, nämlich (Farbnebel-)Abscheidevorrichtungen - im Folgenden mitunter kurz als Abscheidevorrichtungen bezeichnet -, zu diesem Zweck sind bereits bekannt, zum Beispiel in Form der in der EP 2 532 409 B beschriebenen und dort als Filtermodul bezeichneten Abscheidevorrichtung oder in Form der in der DE 10 2014 003 608 A1 beschriebenen und dort ebenfalls als Filtermodul bezeichneten Abscheidevorrichtung.

Eine Aufgabe der vorgeschlagenen Neuerung besteht darin, eine zusammen mit einer Abscheidevorrichtung, zum Beispiel einer Abscheidevorrichtung gemäß der EP 2 532 409 B oder der DE 10 2014 003 608 A1, effizient verwendbare Ergänzung anzugeben, insbesondere eine Ergänzung, welche eine sogenannte Standzeit (die Dauer der Verwendbarkeit) der jeweiligen Abscheidevorrichtung erhöht.

Eine Abscheidevorrichtung, von der die hier vorgeschlagene Neuerung ausgeht, umfasst einen äußeren Rahmen, welcher selbst oder in seinem Innern ein oder mehrere Abscheideelemente oder Abscheideflächen (Farbnebelabscheideelemente bzw. Farbnebelabscheideflächen; kurz: Abscheideelemente bzw. Abscheideflächen; zusammenfassend: Abscheidestufe(n)) aufweist. Der Rahmen ist ein Abscheidestufe(n)aufnahmerahmen und die Oberfläche des Rahmens ist die Oberfläche der Abscheidevorrichtung. Im Betrieb wird eine solche Abscheidevorrichtung von dem mit Partikeln, insbesondere Farbpartikeln, beladenen Rohgasstrom durchströmt. Der Rahmen der Abscheidevorrichtung weist entsprechend eine erste Seite (Frontseite) mit einer Einströmöffnung für den Eintritt des Rohgasstroms in das Innere der Abscheidevorrichtung und eine zweite Seite mit einer Ausströmöffnung für den Austritt des Rohgasstroms aus der Abscheidevorrichtung auf. Die zweite Seite ist zum Beispiel eine der Frontseite gegenüberliegende Rückseite des Rahmens.

An der Frontseite einer solchen Abscheidevorrichtung lässt sich eine als Vorabscheider fungierende weitere Abscheidevorrichtung (Vorabscheider) anbringen. Der Vorabscheider befindet sich dabei in Bezug auf den durch die Abscheidevorrichtung strömenden Rohgasstrom vor der Einströmöffnung und stromaufwärts der Abscheidevorrichtung und kommt daher zuerst (zeitlich vor der Abscheidevorrichtung) mit den vom Rohgasstrom mitgeführten Partikeln in Kontakt. Der Vorabscheider nimmt also bereits einen Teil der vom Rohgasstrom mitgeführten Partikel auf. Der Vorabscheider entlastet insoweit die stromabwärts nachfolgende Abscheidevorrichtung und erhöht somit deren Aufnahmekapazität sowie deren sogenannte Standzeit. Dies bedeutet auch, dass sich die Kombination aus Abscheidevorrichtung und Vorabscheider im Vergleich zu einer Abscheidevorrichtung allein durch eine erhöhte Standzeit auszeichnet.

Auch die hier vorgeschlagene Neuerung geht von einer Kombination aus einer Abscheidevorrichtung und einer stromaufwärts der Abscheidevorrichtung wirksamen Vorabscheidevorrichtung aus. Eine solche Kombination ist selbst eine Abscheidevorrichtung. Deshalb werden zur Unterscheidung die folgenden Begriffe verwendet: Eine Abscheidevorrichtung allein wird als Farbnebelabscheidebasisvorrichtung bezeichnet. Eine Vorabscheidevorrichtung wird als Farbnebelvorabscheidevorrichtung bezeichnet. Eine Kombination aus einer Abscheidebasisvorrichtung und einer Vorabscheidevorrichtung wird als Farbnebelabscheidevorrichtung bezeichnet.

Im Interesse einer besseren Lesbarkeit werden im Folgenden anstelle der vergleichsweise sperrigen Begriffe Farbnebelabscheidebasisvorrichtung, Farbnebelvorabscheidevorrichtung und Farbnebelabscheidevorrichtung mitunter Kurzformen wie folgt verwendet: Eine Farbnebelabscheidebasisvorrichtung wird auch als Abscheidebasisvorrichtung oder kurz als Abscheidebasis bezeichnet; eine Farbnebelvorabscheidevorrichtung wird auch als Vorabscheidevorrichtung oder kurz als Vorabscheider bezeichnet. Eine Farbnebelabscheidevorrichtung wird auch als Abscheidevorrichtung oder kurz als Abscheider bezeichnet.

Ein Abscheider in Form einer Kombination einer Abscheidebasis und einem Vorabscheider ist aus den folgenden, auf die Anmelderin der hier vorgestellten Neuerung zurückgehenden Veröffentlichungen bekannt: DE 20 2021 102 947 U1, DE 20 2021 104 962 U**,** DE 20 2021 106 573 U**,** DE 20 2022 101 219 U**.**

Aus der DE 20 2021 102 947 U1 ist ein dort als Abscheidevorrichtung bezeichneter Abscheider mit Mitteln zur lösbaren Anbringung an einem Filter-/Abscheidemodul bekannt. Aus der DE 20 2021 104 962 U sind eine dort als Abscheidevorrichtung bezeichnete Abscheidebasis und ein Vorabscheider in Form zweier von der Abscheidebasis ausgehender Teile der Abscheidebasis bekannt. Aus der DE 20 2021 106 573 U und der DE 20 2022 101 219 U sind eine dort als Abscheidevorrichtung bezeichnete Abscheidebasis und ein Vorabscheider bekannt, nämlich ein Vorabscheider in Form zweier an der Abscheidebasis anbringbarer Teile der Abscheidebasis.

Die eingangs genannte Aufgabe wird erfindungsgemäß mittels einer Vorrichtung mit den Merkmalen des Anspruchs 1 gelöst, nämlich mittels eines zum Abscheiden von mit einem Rohgasstrom mitgeführten Partikeln bestimmten Abscheiders (Farbnebelabscheidevorrichtung). Der Abscheider umfasst - wie bereits aus dem Stand der Technik bekannt - eine Abscheidebasis (Farbnebelabscheidebasisvorrichtung), nämlich genau eine Abscheidebasis, und einen Vorabscheider (Farbnebelvorabscheidevorrichtung). Die Abscheidebasis ist zur Aufnahme zumindest einer Abscheidestufe (Farbnebelabscheidestufe) bestimmt und eingerichtet. Die Abscheidebasis ist ein Strukturelement, welches die oder jede Abscheidestufe rahmen-/gehäuseartig umgibt. Die Abscheidebasis entspricht also dem, was weiter oben als Rahmen (Rahmen der Abscheidevorrichtung) bezeichnet wurde.

Eine Besonderheit der vorgeschlagenen Neuerung besteht darin, dass der Abscheider zusätzlich zu der Abscheidebasis sowie dem Vorabscheider noch eine Farbnebelabscheideträgervorrichtung umfasst, die - analog zu den weiter oben eingeführten Kurzformen - im Folgenden mitunter als Trägervorrichtung oder kurz als Träger bezeichnet wird. An dem Träger ist der Vorabscheider anbringbar; zum Erhalt eines hier vorgeschlagenen Abscheiders wird der Vorabscheider an dem Träger angebracht und bei einem gebrauchsfertigen Abscheider der hier vorgeschlagenen Art ist an dem Träger ein Vorabscheider angebracht. Der Träger trägt den daran angebrachten Vorabscheider. Daher rechtfertigt sich die Bezeichnung des Trägers als Träger. Alternativ kann der Träger auch als Stützstruktur bezeichnet werden, denn der Träger ist ein Strukturelement, welches den oder jeden daran angebrachten Vorabscheider stützt (und trägt).

Eine weitere Besonderheit besteht darin, dass als Träger Teile der Abscheidebasis fungieren. Mit anderen Worten besteht diese weitere Besonderheit darin, dass der Träger Teile der Abscheidebasis umfasst. Konkret entsteht der mittels der Abscheidebasis bildbare Träger durch ein Herauslösen zweier im Folgenden als Flügel bezeichneter Flächenabschnitte einer ersten Oberfläche der Abscheidebasis aus dieser Oberfläche. Diese beiden Flügel bilden den Träger. Der Träger umfasst diese beiden Flügel.

Beim Stand der Technik gemäß der oben genannten DE 20 2021 104 962 U, DE 20 2021 106 573 U und DE 20 2022 101 219 U ist der jeweilige Vorabscheider stets direkt an der jeweiligen Abscheidebasis angebracht. Es gibt dort also keinen separaten Träger und ohne einen solchen separaten Träger gibt es folglich auch keinen separaten Träger, welcher Teile der Abscheidebasis umfasst, sowie keinen separaten Träger, an dem ein Vorabscheider angebracht werden kann.

Der Träger, also die von dem Träger umfassten Flügel, ist bzw. sind mit der Abscheidebasis verbunden oder an der Abscheidebasis anbringbar/angebracht. Der Begriff Herauslösen meint, dass die beiden Flügel vor dem Herauslösen mit ihren jeweiligen Flächen in der Ebene der ersten Oberfläche der Abscheidebasis liegen und dass nach dem Herauslösen die Flächen der Flügel mit dieser Oberfläche einen Winkel größer 0° einschließen, insbesondere einen Winkel von etwa 45° bis 90°, zum Beispiel 75° bis 90°, insbesondere etwa 75°. Die Flügel sind zum Herauslösen zum Beispiel mittels einer Perforation, einer Stanzung oder dergleichen von der restlichen Oberfläche der Abscheidebasis abgesetzt.

Der Begriff Herauslösen umfasst eine vollständige Entnahme der Flügel aus der ersten Oberfläche, damit diese im Wege des Anbringens an der Abscheidebasis zum Beispiel eingesteckt werden, so dass sich nach dem Einstecken und aufgrund des Einsteckens der oben erwähnte Winkel ergibt. Das Einstecken erfolgt mittels von den Flügeln ausgehender Stecklaschen in dafür vorgesehene Schlitze in der Oberfläche der Abscheidebasis (Steckverbindung), nämlich Schlitze beidseits der Einströmöffnung und parallel zum jeweils unmittelbar benachbarten Rand der Einströmöffnung.

Der Begriff Herauslösen umfasst aber auch ein Herausklappen der Flügel aus der ersten Oberfläche der Abscheidebasis, wobei die Flügel entlang einer dann als gelenkige Verbindung mit der Abscheidebasis fungierenden Knicklinie einstückig mit der Abscheidebasis verbunden bleiben und sich nach dem Herausklappen oder aufgrund des Herausklappens der oben erwähnte Winkel ergibt. Auch dieses Herausklappen ist ein Herauslösen, denn nach dem Herausklappen ist jeder Flügel mit seinen dann freien Rändern und der von den Rändern sowie der Knicklinie eingeschlossenen Fläche aus der ersten Oberfläche der **Ab**scheidebasis herausgelöst. Die herausgeklappten Flügel sind/bleiben mit der Abscheidebasis verbunden.

Die beiden Flügel sind mit Abstand voneinander beidseits der Einströmöffnung entweder mit der Frontseite der Abscheidebasis verbunden oder an der Frontseite der Abscheidebasis anbringbar, nämlich außen an der Abscheidebasis. Die beiden Flügel weisen im herausgelösten und mit der Abscheidebasis zum Beispiel durch Einstecken verbundenen Zustand oder im herausgeklappten Zustand einen Abstand voneinander auf. Dieser Abstand wird mittels der Vorabscheiders überbrückt, indem dieser an den Flügeln angebracht wird/ist. Die Flügel tragen/ stützen den Vorabscheider und die Kombination aus den beiden Flügeln und dem daran angebrachten Vorabscheider erhält durch die Anbringung des Vorabscheiders eine ganz erhebliche, jedenfalls für die Verwendung zur Farbnebelabscheidung ausreichende Stabilität.

An der Abscheidebasis anbringbare Flügel werden zum Erhalt eines hier vorgeschlagenen Abscheiders außen an der Abscheidebasis angebracht und sind bei einem gebrauchsfertigen **Ab**scheider der hier vorgeschlagenen Art außen an der Abscheidebasis angebracht. Zum Anbringen kommt zum Beispiel eine Steckverbindung in Betracht. Dafür weist jeder Flügel ausgehend von dem zum Anbringen an der Abscheidebasis vorgesehenen Rand eine Stecklasche auf und die Abscheidebasis weist in ihrer Oberfläche sowie parallel zum jeweils unmittelbar benachbarten Rand der Einströmöffnung für jeden Flügel zur Aufnahme jeweils einer Stecklasche einen entsprechenden Schlitz auf. Mit der Abscheidebasis verbundene Flügel erfordern keine Anbringung an der Abscheidebasis, denn sie sind bereits/bleiben mit der Abscheidebasis verbunden. Mit der Abscheidebasis verbundene Flügel und an der Abscheidebasis angebrachte Flügel weisen von der angrenzenden Oberfläche der Abscheidebasis weg und nach außen.

Der Träger für den Vorabscheider fungiert als Trag- und Stützstruktur - im Folgenden zusammenfassend als Stützstruktur bezeichnet - für den daran angebrachten Vorabscheider. Die Begriffe Träger und Stützstruktur sind Synonyme. Damit sind auch die Begriffe Farbnebelabscheideträgervorrichtung sowie Abscheideträgervorrichtung einerseits und Stützstruktur andererseits Synonyme.

Schließlich besteht eine Besonderheit des hier vorgeschlagenen Abscheiders auch darin, was als Vorabscheider fungiert. Der Vorabscheider ist nämlich an einer zweiten Oberfläche der Abscheidebasis entnehmbar, insbesondere einer der ersten Oberfläche gegenüberliegenden zweiten Oberfläche. Auch als Vorabscheider fungieren dann Teile der Abscheidebasis. Auch der Vorabscheider umfasst dann Teile der Abscheidebasis. Aus der ersten Oberfläche der Abscheidebasis werden die beiden Flügel für den Träger herausgelöst und an oder aus der zweiten Oberfläche der Abscheidebasis ist dann der Vorabscheider entnehmbar. Als Träger und als Vorabscheider fungiert dann also Material der Abscheidebasis, das ansonsten weggeworfen werden würde. Wenn der Vorabscheider nicht aus der zweiten Oberfläche der Abscheidebasis stammt, wird er zum Beispiel separat zugeliefert.

Der Vorteil der hier vorgeschlagenen Abscheidevorrichtung besteht darin, dass an dem Träger der Vorabscheider und ggf. weitere Vorabscheider angebracht werden können (zumindest ein Vorabscheider). Der Vorabscheider verbindet die Flügel auch miteinander und überbrückt den Abstand zwischen den Flügeln.

Mit der Anbringung des Vorabscheiders ergibt sich eine zusätzliche Abscheideleistung vor (vor im Sinne von stromaufwärts) der Abscheidebasis. Dies erhöht die Abscheideleistung/-kapazität und damit die Standzeit der Kombination. Bei einer eventuellen Anbringung weiterer Vorabscheider ergibt sich eine nochmals zusätzliche Abscheideleistung vor der Abscheidebasis.

Die hier vorgeschlagene Neuerung schafft eine einfache und effiziente Möglichkeit, vor/stromaufwärts einer jeweiligen Abscheidebasis zusätzlich gewissermaßen nochmals eine weitere (Farbnebel-)Abscheidevorrichtung anbringen zu können. Als eine solche weitere Abscheidevorrichtung fungieren der Träger und der daran angebrachte Vorabscheider. Die Kombination umfasst nun eine erhöhte Anzahl von Abscheidestufen, denn die Abscheidebasis umfasst zumindest eine Abscheidestufe und die weitere Abscheidevorrichtung umfasst in Form des Vorabscheiders eine nochmals weitere Abscheidestufe.

Eine Abscheidebasis, zum Beispiel eine Abscheidebasis wie sie aus der EP 2 532 409 B bekannt ist, wird zur Farbnebelabscheidung regelmäßig in einer sogenannten Absaugwand oder einem sogenannten Absaugboden platziert. Eine solche Absaugwand und ein solcher Absaugboden weisen in einer matrixartigen Struktur Fächer zur Aufnahme jeweils einer Abscheidebasis (Abscheidebasisvorrichtung) auf. Eine Absaugwand/ein Absaugboden nimmt in den jeweiligen Fächern eine Vielzahl von Abscheidebasisvorrichtungen auf.

Eine Aufnahmekapazität einer Absaugwand/eines Absaugbodens hängt von der Anzahl der Fächer sowie der Aufnahmekapazität der in den Fächern befindlichen Abscheidebasisvorrichtungen ab. Vor allem in einer bestehenden Anlage (Lackieranlage, Lackierstraße oder dergleichen) lässt sich die Anzahl der Fächer nicht erhöhen, jedenfalls nicht ohne Weiteres. Die Aufnahmekapazität einer jeden Abscheidebasisvorrichtung hängt von deren Dimension und damit von der Dimension des jeweiligen Fachs ab. Auch und wiederum vor allem in einer bestehenden Anlage lässt sich die Dimension der Fächer nicht erhöhen, jedenfalls nicht ohne Weiteres. Die Aufnahmekapazität einer jeweiligen Absaugwand/eines jeweiligen Absaugbodens ist damit fix.

Indem nach dem hier vorgeschlagenen Ansatz vor/stromaufwärts einer jeweiligen Abscheidebasis eine weitere Abscheidevorrichtung angebracht werden kann, besteht jetzt die Möglichkeit, die Aufnahmekapazität einer jeweiligen Absaugwand/eines jeweiligen Absaugbodens zu erhöhen, indem vor zumindest einer Abscheidebasis eine weitere Abscheidevorrichtung der hier vorgeschlagenen Art (Träger mit einem Vorabscheider) anbracht ist/wird. Zur Erhöhung der Aufnahmekapazität einer jeweiligen Absaugwand/eines jeweiligen Absaugbodens wird bevorzugt eine Mehrzahl von Abscheidebasisvorrichtungen jeweils mit einer solchen weiteren Abscheidevorrichtung versehen, bevorzugt jede Abscheidebasisvorrichtung.

Indem der Träger und der Vorabscheider Teile der Abscheidebasis umfassen, wird für den Träger und den Vorabscheider kein oder nur vergleichsweise wenig zusätzliches Material benötigt und Träger und Vorabscheider sind leicht herstellbar, nämlich auch durch gering qualifiziertes Personal und/oder erst am Verwendungsort der Abscheidevorrichtung herstellbar.

Die mit der Anmeldung eingereichten Ansprüche sind Formulierungsvorschläge ohne Präjudiz für die Erzielung weitergehenden Schutzes. Da speziell die Merkmale der abhängigen Ansprüche im Hinblick auf den Stand der Technik am Prioritätstag eigene und unabhängige Erfindungen bilden können, behält die Anmelderin sich vor, diese oder noch weitere, bisher nur in der Beschreibung und/oder Zeichnung offenbarte Merkmalskombinationen zum Gegenstand unabhängiger Ansprüche oder Teilungserklärungen zu machen. Sie können weiterhin auch selbständige Erfindungen enthalten, die eine von den Gegenständen der jeweils in Bezug genommenen Ansprüche unabhängige Gestaltung aufweisen.

Bei einer bevorzugten Ausführungsform der hier vorgeschlagenen Neuerung geben das Herauslösen der beiden Flügel aus der ersten Oberfläche der Abscheidebasis eine Einströmöffnung für den Eintritt eines Rohgasstroms in das Innere der Abscheidebasis und das Entnehmen des Vorabscheiders aus der zweiten Oberfläche der Abscheidebasis eine Ausströmöffnung für den Austritt des Rohgasstroms aus dem Inneren der Abscheidebasis frei, nämlich jeweils ganz oder zumindest teilweise frei. Die erste Oberfläche ist also die Oberfläche mit der Einströmöffnung und die gegenüberliegende zweite Oberfläche ist entsprechend die Oberfläche mit der Ausströmöffnung. Herausgeklappte Flügel werden stets aus der Oberfläche mit der Einströmöffnung herausgeklappt und der Vorabscheider wird entsprechend aus der Oberfläche mit der Ausströmöffnung entnommen. Bei herausgelösten und später eingesteckten Flügeln ist das Herauslösen der Flügel auch aus der Oberfläche mit der Ausströmöffnung und entsprechend das Entnehmen des Vorabscheiders aus der Oberfläche mit der Einströmöffnung möglich. Das Einstecken oder dergleichen der Flügel erfolgt aber stets an oder in der Oberfläche mit der Einströmöffnung. Das Herauslösen der Flügel und das Entnehmen des Vorabscheiders öffnet also die Ein- und Ausströmöffnung. Eine offene Einströmöffnung und eine offene Ausströmöffnung sind für die Farbnebelabscheidung ohnehin erforderlich. Das Herauslösen der Flügel und das Entnehmen des Vorabscheiders sind also Teil einer ohnehin erforderlichen Maßnahme.

Bei einer nochmals weiter bevorzugten Ausführungsform der hier vorgeschlagenen Neuerung gehen die beiden Flügel von einander gegenüberliegenden Rändern der Einströmöffnung aus. Dann können die Flügel auch als Türen in die Abscheidebasis bezeichnet werden. Jeder Flügel ist dann gewissermaßen ein Türflügel einer zweiflügligen Tür. Das Öffnen der Einströmöffnung, also das Herauslösen der Flügel/Türflügel zum Erhalt der Einströmöffnung sowie zum Erhalt der Stützstruktur, ist dann ein Vorgang, den selbst gering qualifiziertes Personal intuitiv vornimmt. Diese Ausführungsform der hier vorgeschlagenen Neuerung lässt sich kurz gefasst auch dadurch beschreiben, dass die Flügel in der Abscheidebasis geöffnet werden und zur Verwendung zur Farbnebelabscheidung geöffnet sind und dass an den Flügeln der Vorabscheider anbringbar ist und zur Verwendung zur Farbnebelabscheidung angebracht ist.

Vorteilhaft sind/bleiben die beiden Flügel auch im herausgelösten und als Stützstruktur fungierenden Zustand einstückig und gelenkig mit der Abscheidebasis verbunden. Bei solchen gelenkig mit der Abscheidebasis verbundenen Flügeln wird das Herauslösen aus der ersten Oberfläche zu einem Herausklappen aus dieser Oberfläche. Der Vorteil einer solchen einstückigen Verbindung besteht darin, dass die Flügel normalerweise nicht verloren gehen. Ein weiterer Vorteil besteht darin, dass die einstückige Verbindung mit der Abscheidebasis für eine sehr gut belastbare Verbindung des Trägers/der Stützstruktur mit der Abscheidebasis sorgt. Eine gute und belastbare Verbindung mit der Abscheidebasis ist erforderlich, weil der am Träger angebrachte Vorabscheider während der Farbnebelabscheidung eine erhebliche Gewichtszunahme erfährt.

Zur Anbringung des Vorabscheiders am Träger, also an den beiden Flügeln, ist vorteilhaft vorgesehen, dass die beiden Flügel an jeweils zumindest einer Kante eine Stecklasche (zumindest eine Stecklasche) aufweisen und dass der Vorabscheider seitlich jeweils einen Schlitz (seitlich jeweils zumindest einen Schlitz) aufweist. Der Vorabscheider ist dann an dem Träger, nämlich an den beiden Flügeln, anbringbar, indem jeweils eine Stecklasche in jeweils einen Schlitz eingesteckt wird. Die resultierende Steckverbindung gewährleistet eine ausreichend feste Anbringung des Vorabscheiders am Träger und ist unkompliziert herstellbar.

Vorteilhaft ist vorgesehen, dass die Flügel eine schräge Kante aufweisen und dass die Stecklaschen von den schrägen Kanten ausgehen. Die Flügel weisen eine schräge Kante auf, wenn diese dreieckig (allgemeines, ebenes Dreieck) sind. Eine schräge Kante ist aber auch möglich, wenn die Flügel trapezförmig (ebenes Viereck mit zwei parallelen Seiten) sind. Indem die Stecklaschen jeweils von einer schrägen Kante ausgehen, ergibt sich eine schräge Orientierung des an den Flügeln angebrachten Vorabscheiders. Eine solche schräge Orientierung hat sich als für einen Vorabscheider vorteilhafte Orientierung erwiesen. Anhaftende Stoffe können an der schrägen Oberfläche herablaufen und sich im Verlauf des Herablaufens verfestigen, so dass es nicht von der Oberfläche des Vorabscheiders heruntertropft. Dennoch herabtropfende Stoffe tropfen in einem Abstand von der Frontseite der Abscheidebasis herunter und tragen so nicht zum Verkleben oder dergleichen der Abscheidebasis in dem die Abscheidebasis aufnehmenden Fach bei.

Bei einer vorteilhaften Ausführungsform der hier vorgeschlagenen Neuerung ist zum Erhalt einer noch besseren Stabilität der Kombination aus Träger und Vorabscheider zusätzlich zu den herauslösbaren/herausklappbaren Flügeln eine herauslösbare/herausklappbare Stütze vorgesehen. Die Stütze entsteht bevorzugt - wie die Flügel - durch Herauslösen/Herausklappen aus der ersten Oberfläche der Abscheidebasis, also aus derselben Oberfläche wie die Flügel.

Bei einer nochmals weiter vorteilhaften Ausführungsform der hier vorgeschlagenen Neuerung umfasst die Einströmöffnung eine Mehrzahl von Einströmbereichen, darunter einen Einströmbereich, der bei einer gebrauchsfertig angebrachten Abscheidebasis zum Beispiel oben liegt (oberer Abscheidebereich). Dieser obere Abscheidebereich hat eine Trapezform. Der trapezförmige Einströmbereich wird durch zwei parallele, voneinander beanstandete Kanten sowie zwei, insbesondere gleich lange, die Endpunkte der beiden parallelen Kanten miteinander verbindende weitere Kanten begrenzt, wobei eine der beiden parallelen Kanten länger ist als die andere (gleichschenkliges Trapez). Es handelt sich um eine Öffnung wie in der DE 20 2022 101 219 U beschrieben, auf die hier zur Vermeidung unnötiger Wiederholungen verwiesen wird und die mit diesem Hinweis mit ihrem vollständigen Offenbarungsgehalt bezüglich der Form und der Funktion dieser Öffnung in die hier vorgelegte Beschreibung einbezogen gelten soll. Passend zu dem trapezförmigen Einströmbereich weist der Vorabscheider an einer Kante eine mittels seitlicher Schlitze von der restlichen Fläche des Vorabscheiders abgesetzte Stecklasche auf, nämlich eine Stecklasche, wie ebenfalls in der DE 20 2022 101 219 U beschrieben, auf die hier ebenfalls zur Vermeidung unnötiger Wiederholungen verwiesen wird und die mit diesem Hinweis gleichfalls mit ihrem vollständigen Offenbarungsgehalt bezüglich der Form und der Funktion dieser Stecklasche in die hier vorgelegte Beschreibung einbezogen gelten soll. Die Stecklasche ist zum Einstecken in die trapezförmige Öffnung vorgesehen. Das Einstecken erfolgt im Bereich der längeren der beiden parallelen Kanten der trapezförmigen Öffnung und die Stecklasche wird im Bereich der seitlichen Schlitze auf die beiden diagonalen Kanten der trapezförmigen Öffnung aufgelegt. Dort sinkt der Vorabscheider herab oder wird herabgedrückt, bis die diagonalen Kanten den Boden der seitlichen Schlitze erreichen. Jetzt ist der Vorabscheider in der trapezförmigen Öffnung fixiert. Diese Fixierung sorgt zusammen mit der Fixierung an den Flügeln für eine stabile und belastbare Anbringung des Vorabscheiders.

Die hier vorgeschlagene Neuerung ist insgesamt auch die Verwendung eines Trägers, welcher Teile einer Abscheidebasis umfasst, zur Anbringung zumindest eines Vorabscheiders am Träger und damit zumindest mittelbar an der Abscheidebasis. Damit ergibt sich eine Abscheidevorrichtung wie hier und im Folgenden beschrieben, welche die Abscheidebasis, den Träger und den Vorabscheider umfasst. Für konstruktive Einzelheiten einer aufgrund einer solchen Verwendung einer Stützstruktur resultierenden Abscheidevorrichtung wird auf die vorstehenden Ausführungen sowie auf die Erläuterungen im speziellen Beschreibungsteil verwiesen. Mittels des Vorabscheiders resultiert eine erhöhte Standzeit der Abscheidevorrichtung.

Die hier vorgeschlagene Neuerung ist des Weiteren auch ein Verfahren zum Herstellen einer Abscheidevorrichtung wie hier und im Folgenden beschrieben. Die Abscheidevorrichtung ist eine zum Abscheiden von mit einem Rohgasstrom mitgeführten Partikeln, insbesondere Farbpartikeln, bestimmte und eingerichtete Abscheidevorrichtung. Die Abscheidevorrichtung umfasst eine Abscheidebasis (Farbnebelabscheidebasisvorrichtung), einen Vorabscheider (Farbnebelvorabscheidevorrichtung) sowie einen Träger (Farbnebelabscheideträgervorrichtung) und der Träger umfasst Teile der Abscheidebasis. Das Verfahren zum Erhalt der Abscheidevorrichtung (Farbnebelabscheidevorrichtung) umfasst die folgenden Verfahrensschritte: Zum Erhalt des Trägers werden zwei Flügel aus einer ersten Oberfläche der Abscheidebasis herausgelöst, zum Beispiel herausgeklappt oder entnommen sowie seitlich neben der Einströmöffnung eingesteckt. Der Vorabscheider wird zum Beispiel an der zweiten Oberfläche entnommen und an den beiden Flügel angebracht. Zum Anbringen des Vorabscheiders an den Flügeln werden zum Beispiel von den Flügeln ausgehende Stecklaschen in Schlitze am Rand einer ebenen Zentralfläche des Vorabscheiders eingesteckt, so dass eine Steckverbindung resultiert.

Ein spezieller Vorteil, der für die hier vorgeschlagene Neuerung insgesamt gilt, besteht darin, dass der Träger einerseits und der Vorabscheider andererseits (also beide) bis zur Verwendung kaum Raum beanspruchen. Der Träger, nämlich die beiden davon umfassten Flügel, sowie der Vorabscheider sind flach und liegen bis zur Verwendung in der Ebene der betreffenden Oberfläche der Abscheidebasis und beanspruchen entsprechend kaum Raum, jedenfalls keinen zusätzlichen Raum, der nicht ohnehin bereits von der Abscheidebasis selbst beansprucht wird. Die Abscheidebasis kann vorteilhaft flach versandt werden. Eine flach versandte Abscheidebasis wird erst am Einsatzort für eine Aufnahme zumindest einer Abscheidestufe vorbereitet, insbesondere aufgefaltet und im aufgefalteten Zustand fixiert. Im Vergleich zu großvolumigen Abscheidevorrichtungen lassen sich durch das flache Versenden Transportkosten einsparen und/oder es lässt sich bei gleichen Transportkosten eine größere Teilemenge versenden.

Die manuellen Maßnahmen zum Erhalt der Abscheidevorrichtung, nämlich insbesondere das Anbringen, Einstecken, Herauslösen und/oder Herausklappen, zum Erhalt des Trägers und zur Anbringung des Vorabscheiders daran sind extrem einfach, können auch von gering qualifiziertem Personal, insbesondere direkt am Verwendungsort, ausgeführt werden und erfordern zudem nur wenig Zeit.

Als Material für die Abscheidebasis - und damit auch für den Teile der Abscheidebasis umfassenden Träger und ebenso für den Vorabscheider - kommt zum Beispiel Karton, Pappe (insbesondere Vollpappe oder Wellpappe), Kunststoff, Metall (insbesondere pyrolysebeständiges Metall) oder dergleichen in Betracht. Soweit hier und im Folgenden hinsichtlich des Trägers erwähnt ist, dass dieser Teile der Abscheidebasis umfasst, beinhaltet dies ausdrücklich auch, dass der Träger genau die beiden genannten Flügel, insbesondere nur die beiden Flügel, umfasst und dass es sich bei den Flügeln um vormaliges Material der Abscheidebasis handelt.

Zur Vermeidung unnötiger, weiterer Wiederholungen gilt für die hier vorgelegte Beschreibung, dass Merkmale und Details, die im Zusammenhang mit der Abscheidevorrichtung sowie eventueller Ausgestaltungen beschrieben sind, selbstverständlich auch im Zusammenhang mit deren Verwendung sowie dem Verfahren zu deren Herstellung und umgekehrt gelten. Dementsprechend kann das Verfahren auch mittels einzelner oder mehrerer Verfahrensmerkmale fortgebildet sein, die sich auf konstruktive Einzelheiten der Abscheidevorrichtung und deren Bestimmung beziehen. Genauso kann die Abscheidevorrichtung durch Mittel zur Ausführung von im Rahmen des Verfahrens ausgeführten Verfahrensschritten fortgebildet sein. Folglich gelten Merkmale und Details, die im Zusammenhang mit der Abscheidevorrichtung oder im Zusammenhang mit deren Verwendung oder deren Herstellung beschrieben sind, jeweils wechselseitig, also Verfahrensmerkmale als gegenständliche Merkmale (Vorrichtungsmerkmale), nämlich zum Beispiel als von der Abscheidevorrichtung umfasste Mittel zur Ausführung eines Verfahrensschritts oder einer Verfahrensschrittfolge, und Vorrichtungsmerkmale als Verfahrensmerkmale, nämlich zum Beispiel eine konkrete Verwendung einer konstruktiven Einzelheit der Abscheidevorrichtung. Mit diesem Hinweis soll gelten, dass bezüglich der Offenbarung zu den einzelnen Vorrichtungs-, Verfahrens- oder Verwendungsaspekten der hier vorgeschlagenen Neuerung stets wechselseitig Bezug genommen wird bzw. werden kann.

Nachfolgend werden Ausführungsbeispiele der Erfindung anhand der Zeichnung näher erläutert. Einander entsprechende Gegenstände oder Elemente sind in allen Figuren mit den gleichen Bezugszeichen versehen. Mit Blick auf die Übersichtlichkeit der Darstellungen werden die Bezugszeichen jedoch nicht in allen Figuren wiederholt. Insoweit wird auf eine der vorangehenden Figuren verwiesen.

Die Ausführungsbeispiele sind nicht als Einschränkung der Erfindung zu verstehen. Vielmehr sind im Rahmen der vorliegenden Offenbarung durchaus auch Ergänzungen und Modifikationen möglich, insbesondere solche, die zum Beispiel durch Kombination oder Abwandlung von einzelnen in Verbindung mit den im allgemeinen oder speziellen Beschreibungsteil beschriebenen sowie in den Ansprüchen und/oder der Zeichnung enthaltenen Merkmalen oder Verfahrensschritten für den Fachmann im Hinblick auf die Lösung der Aufgabe entnehmbar sind und durch kombinierbare Merkmale zu einem neuen Gegenstand oder zu neuen Verfahrensschritten bzw. Verfahrensschrittfolgen führen.

Es zeigen
- Fig. 1: eine Farbnebelabscheidevorrichtung mit einer Farbnebelabscheidebasisvorrichtung, einer Farbnebelvorabscheidevorrichtung und einer Farbnebelabscheideträgervorrichtung,
- Fig. 2: die Farbnebelabscheidebasisvorrichtung aus Figur 1 mit zur Verwendung als Farbnebelabscheideträgervorrichtung bestimmten Flügeln,
- Fig. 3: die Farbnebelabscheidebasisvorrichtung aus Figur 1 mit aus der Farbnebelabscheidebasisvorrichtung herausgeklappten (geöffneten) Flügeln,
- Fig. 4: und
- Fig. 5: eine Farbnebelvorabscheidevorrichtung gemäß Figur 1 in flachem Zustand in einer Draufsicht bzw. einer isometrischen Ansicht,
- Fig. 6: eine Darstellung zur Veranschaulichung des Vorgangs des Anbringens der Farbnebelvorabscheidevorrichtungen an den Flügeln sowie an der Farbnebelabscheidebasisvorrichtung,
- Fig. 7: und
- Fig. 8: das Material zum Erhalt einer Farbnebelabscheidebasisvorrichtung in flachem Zustand.

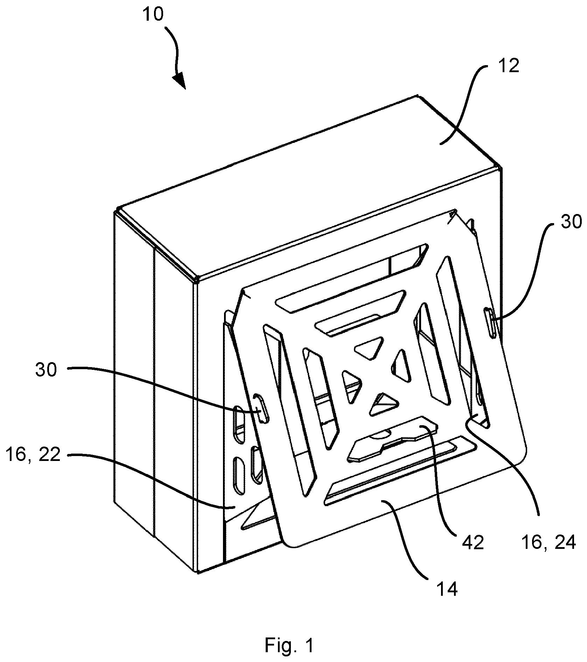

Die Darstellung in Figur 1 zeigt eine Ausführungsform einer hier vorgeschlagenen Farbnebelabscheidevorrichtung 10. Eine solche wird im Folgenden oftmals auch als Abscheidevorrichtung 10 oder kurz als Abscheider 10 bezeichnet.

Die Abscheidevorrichtung 10 umfasst eine Farbnebelabscheidebasisvorrichtung 12, eine Farbnebelvorabscheidevorrichtung 14 sowie eine Farbnebelabscheideträgervorrichtung 16. Eine Farbnebelabscheidebasisvorrichtung 12, eine Farbnebelvorabscheidevorrichtung 14 und eine Farbnebelabscheideträgervorrichtung 16 werden im Folgenden oftmals kurz als Abscheidebasis 12, Vorabscheider 14 bzw. Träger 16 bezeichnet. Für eine Farbnebelabscheideträgervorrichtung 16 werden mitunter auch die Bezeichnungen Trägervorrichtung 16 oder Stützstruktur 16 verwendet.

Bei der Ausführungsform in Figur 1 umfasst der Träger 16 zwei mit der Abscheidebasis 12 verbundene Flügel 22, 24. Jeder Flügel 22, 24 ist ein Teil des Trägers 16. Am Träger 16, nämlich zumindest an dem Träger 16 sowie an dessen Flügeln 22, 24, ist bei der gezeigten Ausführungsform genau ein Vorabscheider 14 angebracht.

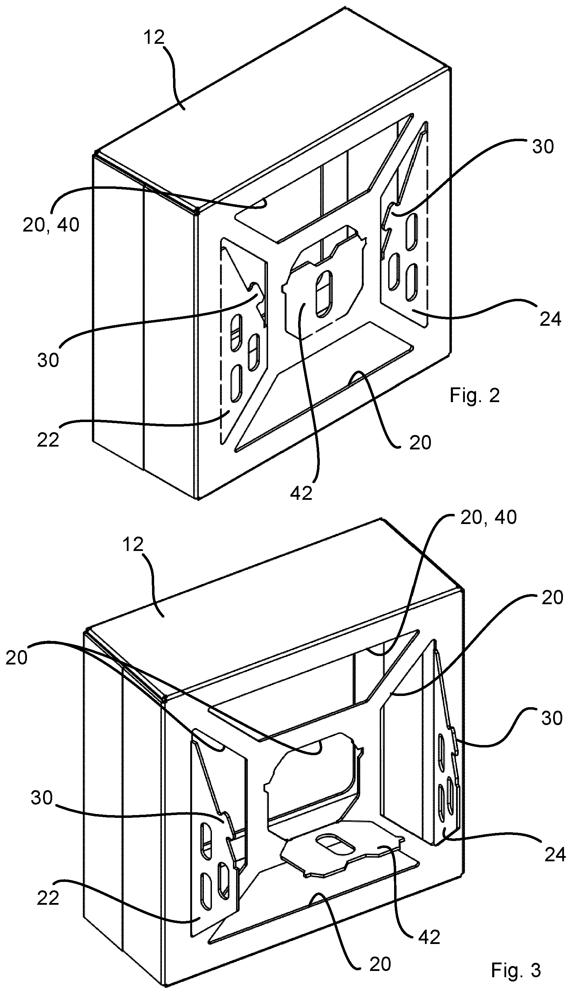

Die Darstellungen in Figur 2 und Figur 3 zeigen die Abscheidebasis 12 aus Figur 1 jeweils mit Blick auf deren Frontseite und die dortige Einströmöffnung 20. Die Darstellung in Figur 2 zeigt die Abscheidebasis 12 mit zwei Flügeln 22, 24. Die Darstellung in Figur 3 zeigt dieselbe Abscheidebasis 12 in geöffnetem Zustand, also mit herausgeklappten Flügeln 22, 24.

Die Einströmöffnung 20 in der Frontseite der Abscheidebasis 12 ist zum Zweck der Farbnebelabscheidung strukturiert und umfasst insoweit zum Beispiel Einströmbereiche in Form von Öffnungen in einer Gitterstruktur. Die Bezugslinien in Figur 2 und Figur 3 gehen zu den Randlinien jeweils eines von mehreren Einströmbereichen in der Frontseite der Abscheidebasis 12. Bei der gezeigten Ausführungsform bildet die Gesamtheit der Einströmbereiche die Einströmöffnung 20.

Bei einem am Träger 16, also an dessen Flügeln 22, 24, angebrachten Vorabscheider 14 sind die Flügel 22, 24 in eine 75°-Stellung geöffnet, wie dies in der Darstellung in Figur 3 gezeigt ist. Grundsätzlich sind Stellungen in einem Bereich von etwa 45° bis 90° möglich und sinnvoll, zum Beispiel Stellungen in einem Bereich von 75° bis 90°, insbesondere eine Stellung in einem Bereich von etwa 75°. Im geöffneten Zustand wird die Einströmöffnung 20 frei. Die Einströmöffnung 20 erlaubt - in an sich bekannter Art und Weise - das Einströmen eines mit Partikeln, insbesondere Farbpartikeln, beladenen Rohgasstroms in das Innere der Abscheidebasis 12.

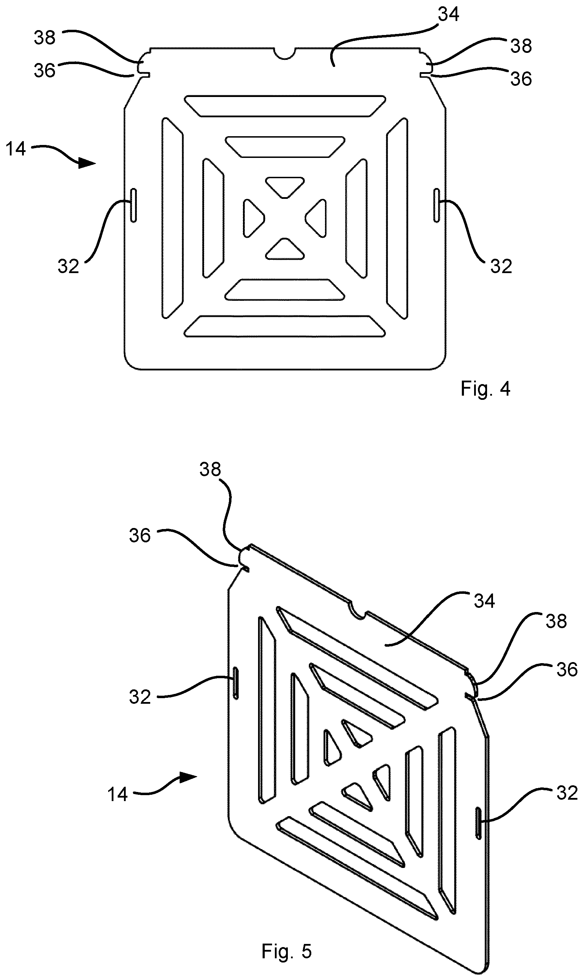

Die Darstellung in Figur 4 zeigt eine Draufsicht einer Ausführungsform eines Vorabscheiders 14 und in Figur 5 ist derselbe Vorabscheider 14 in einer isometrischen Darstellung gezeigt. Der Vorabscheider 14 ist - wie die Einströmöffnung 20 - zum Zweck der Farbnebelabscheidung strukturiert und umfasst insoweit zum Beispiel Öffnungen in einer Gitterstruktur.

Zur Anbringung eines Vorabscheiders 14 an dem Träger 16, nämlich den davon umfassten Flügeln 22, 24, weisen die Flügel 22, 24 Stecklaschen 30 und der Vorabscheider 14 Schlitze 32 auf. Die Flügel 22, 24 weisen die Stecklaschen 30 am Rand einer ihrer Kanten auf. Der Vorabscheider 14 weist die Schlitze 32 in seiner Oberfläche und jeweils benachbart zu und parallel mit zwei ersten, einander gegenüberliegenden Seiten auf. Neben diesen beiden ersten Seiten weist der Vorabscheider 14 noch zwei zweite, einander gegenüberliegende Seiten auf, auf die weiter unten noch eingegangen wird.

Beim Anbringen des Vorabscheiders 14 am Träger 16 werden die Stecklaschen 30 (Flügelstecklaschen 30) in die Schlitze 32 des Vorabscheiders 14 eingesteckt und es resultiert eine Steckverbindung; der Vorabscheider 14 ist mittels dieser Steckverbindung am Träger 16, nämlich an dessen Flügeln 22, 24, angebracht. Alternativ kann die Anbringung des Vorabscheiders 14 am Träger 16 auch dahingehend beschrieben werden, dass der Vorabscheider 14 mittels seiner Schlitze 32 auf die Stecklaschen 30 der Flügel 22, 24 aufgesetzt und schließlich aufgesteckt wird. Auch dann resultiert eine Steckverbindung und auch dann ist der Vorabscheider 14 mittels der Steckverbindung, nämlich mittels der Stecklaschen 30 und der Schlitze 32, am Träger 16 angebracht.

Für die Stecklaschen 30 an den Flügeln 22, 24 - und für Stecklaschen allgemein - gilt, dass bei jeder Erwähnung einer Stecklasche 30 auch eine Mehrzahl von Stecklaschen 30 mitzulesen ist ("zumindest eine Stecklasche"). Bei einer Mehrzahl von Stecklaschen 30 ist zum Einstecken der Stecklaschen 30 auch eine entsprechende Mehrzahl von Schlitzen 32, nämlich Schlitze 32 im Vorabscheider 14 oder Schlitze allgemein - erforderlich. Entsprechend ist bei jeder Erwähnung eines Schlitzes 32 auch eine eventuelle Mehrzahl von Schlitzen 32 mitzulesen ("zumindest ein Schlitz", jeweils ein Schlitz für jede Stecklasche).

In den Figuren ist eine Ausführungsform mit Flügeln 22, 24 mit einer Trapezform gezeigt. Jeder Flügel 22, 24 hat eine lange Seite (Basis). Mit der langen Seite ist der Flügel 22, 24 mit der Abscheidebasis 12 verbunden oder an der Abscheidebasis 12 angebracht. Der langen Seite liegt eine zu dieser parallele kurze Seite gegenüber. Zwei schräge Seiten verbinden die lange und die kurze Seite. An einer der schrägen Seiten, nämlich an der längeren schrägen Seite, befindet sich die Stecklasche 30 des jeweiligen Flügels 22, 24. Ein an den Flügeln 22, 24 angebrachter Vorabscheider 14 ist also zur Ebene der Frontseite der Abscheidebasis 12 geneigt. Der Verlauf der längeren schrägen Seite der Flügel 22, 24 bestimmt die Lage des Vorabscheiders 14 und dessen Orientierung.

Bei einer vorteilhaften Ausführungsform ist der Vorabscheider 14 nicht nur an den Flügeln 22, 24, sondern auch an der Abscheidebasis 12 angebracht, nämlich an der Einströmöffnung 20, genauer an einem der Einströmbereiche der Einströmöffnung 20. Zu diesem Zweck ist eine der beiden zweiten Seiten des Vorabscheiders 14 entsprechend gestaltet, nämlich als Stecklasche 34. Die Stecklasche 34 ist mittels seitlicher Schlitze 36 von der restlichen Fläche des Vorabscheiders 14 abgesetzt. Diese Schlitze 36 verlaufen parallel zur Außenkante der Stecklasche 34 und sind zum Rand des Vorabscheiders 14, nämlich zum Rand der beiden ersten Seiten des Vorabscheiders 14 offen. Aufgrund dieser Schlitze 36 resultieren oberhalb der Schlitze 36, also in Richtung auf den freien Rand der Stecklasche 34, Nasen 38.

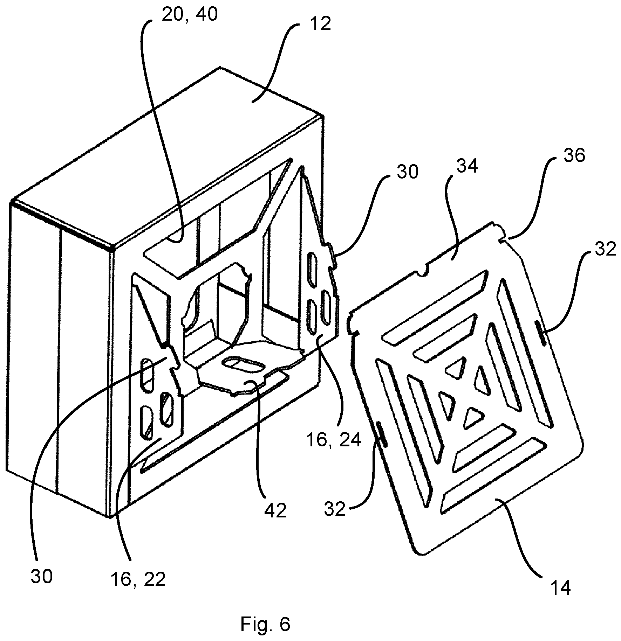

Mittels der Schlitze 36 wird der Vorabscheider 14 an der Abscheidebasis 12 angebracht, nämlich an der Einströmöffnung 20 und dort an einem davon umfassten trapezförmigen Einströmbereich 40 (Figur 2, Figur 3, Figur 6).

Der trapezförmige Einströmbereich 40 wird durch zwei parallele, voneinander beanstandete Kanten sowie zwei, insbesondere gleich lange, die Endpunkte der beiden parallelen Kanten miteinander verbindende schräge Kanten begrenzt. Eine der beiden parallelen Kanten ist länger als die andere. Die längere Kante ist zudem länger als eine Breite der Stecklasche 34 und die kürzere dieser beiden Kanten ist kürzer als diese Breite, wobei die Breite der Stecklasche 34 entlang ihrer langen freien Außenkante gemessen wird. Mit anderen Worten: Die Stecklasche 34 kann im Bereich der längeren Kante des trapezförmigen Einströmbereichs 40 in diesen eingeführt werden, während nach einem solchen Einführen ein Herausziehen der Stecklasche 34 im Bereich der kürzeren Kante des trapezförmigen Einströmbereichs 40 nicht möglich ist.

Beim und im Zusammenhang mit dem Einführen der Stecklasche 34 in den Einströmbereich 40 wird der Vorabscheider 14 mit seinen Schlitzen 36 auf die schrägen Kanten des Einströmbereichs 40 aufgesetzt. Diese Kanten greifen dabei in die Schlitze 36 ein und der Vorabscheider 14 ist damit auch an der Abscheidebasis 12 angebracht, nämlich zusätzlich zu der Anbringung an den Flügeln 22, 24 auch an der Abscheidebasis 12 und deren Einströmöffnung 20 angebracht.

Für weitere Einzelheiten dieser Anbringung wird auf die bereits erwähnte ältere Anmeldung derselben Anmelderin mit der Veröffentlichungsnummer DE 20 2022 101 219 U verwiesen.

Die in den Figuren gezeigte Ausführungsform umfasst eine optionale Stütze 42 für den an den Flügeln 22, 24 angebrachten Vorabscheider 14. Bei der gezeigten Ausführungsform ist die Stütze 42 aus der Abscheidebasis 12 herausklappbar/wird aus der Abscheidebasis 12 herausgeklappt. Zum Stützen des Vorabscheiders 14 ist/wird das freie Ende der Stütze 42 in eine der Öffnungen im Vorabscheider 14 einsteckbar bzw. gesteckt, wie dies in der Darstellung in Figur 1 erkennbar ist.

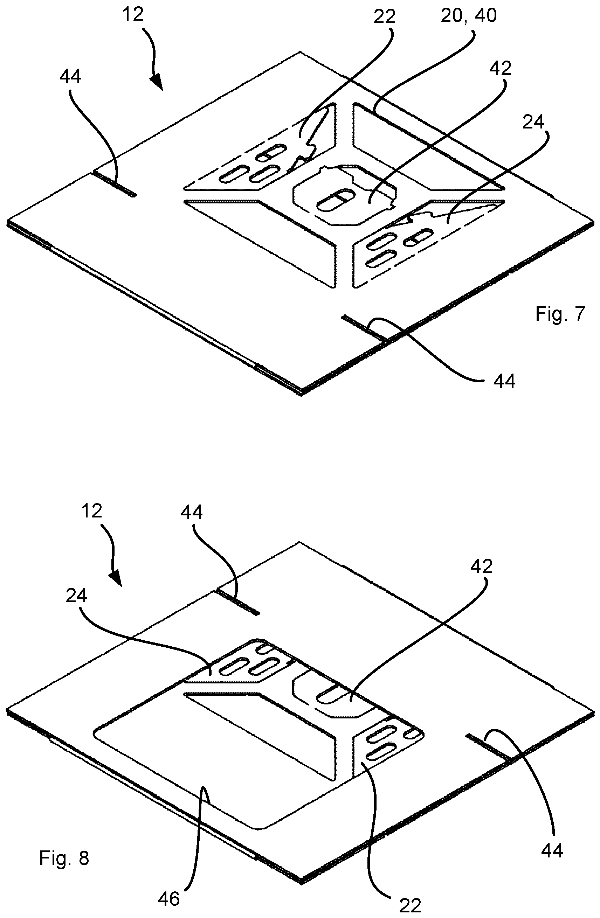

Die Darstellungen in Figur 7 und Figur 8 zeigen beispielhaft jeweils eine Abscheidebasis 12 - besser: das zum Erhalt einer Abscheidebasis 12 bestimmte Material - in flachem Zustand, also einem Zustand, wie er für den Versand in Betracht kommt, sowie in einem Zustand vor dem Auffalten zum Erhalt der in den vorangehenden Figuren gezeigten kubischen, insbesondere würfelförmigen Konfiguration.

Bei der in Figur 7 gezeigten Situation fällt der Blick auf zwei Flügel 22, 24, die nach einem Herauslösen, nämlich einem Herausklappen, die Einströmöffnung 20 freigeben, nämlich bei der gezeigten Ausführungsform einen Teil der Einströmöffnung 20 freigeben. Die Darstellung in Figur 8 zeigt die gegenüberliegende Unterseite des Materials aus Figur **7****.** Beispielhaft gezeigt ist das Material mit einer Öffnung 46, die nach dem Auffalten zum Erhalt der in den vorangehenden Figuren gezeigten kubischen, insbesondere würfelförmigen Konfiguration als Ausströmöffnung (die Bezugslinie geht zum Rand der Öffnung 46) der Abscheidebasis 12 fungiert. Der Vorabscheider 14 stammt zum Beispiel aus diesem Bereich des Materials und ist bei der in Figur 8 gezeigten Situation bereits entfernt.

Das Material für eine Abscheidebasis 12 zum Anbringen zumindest eines Flügels 22, 24 an der Abscheidebasis 12 hat im flachen Zustand ein ähnliches Aussehen wie in Figur 7 und Figur 8 gezeigt. Die in Figur 7 und Figur 8 gezeigten Einschnitte 44 erlauben das Aufstellen des Materials zum Erhalt einer Abscheidebasis 12 wie in den vorangehenden Figuren gezeigt.

Die Darstellungen in den Figuren zeigen Konfigurationen mit herausgelösten/herauslösbaren Flügeln 22, 24, nämlich aus der Abscheidebasis 12 herausgeklappten/herausklappbaren Flügeln 22, 24. Alternativ dazu sind auch herausgelöste/herauslösbare Flügeln 22, 24, nämlich aus der Abscheidebasis 12 entnommene/entnehmbare Flügel 22, 24 möglich. Solche Flügel 22, 24 stammen aus dem Bereich der Einströmöffnung 20 und/oder der Ausströmöffnung und werden im Bereich der Einströmöffnung 20 sowie beidseits der Einströmöffnung 20 angebracht (sind dort anbringbar). Zum Anbringen kommt eine Steckverbindung in Betracht, mit einerseits Schlitzen in der Abscheidebasis 12 beidseits der Einströmöffnung 20 und parallel zum jeweils unmittelbar benachbarten Rand der Einströmöffnung 20 sowie andererseits Stecklaschen an den Flügeln 22, 24. Das Anbringen an der Abscheidebasis 12 erfolgt, indem die Stecklaschen in die Schlitze eingesteckt werden. Alternativ zu insgesamt herausgeklappten/herausklappbaren Flügeln 22, 24 oder insgesamt entnommenen/entnehmbaren Flügeln 22, 24 kommt auch eine Mischform in Betracht, bei der einer der Flügel 22, 24 herausgeklappt/herausklappbar und der andere Flügel 22, 24 entnommen/entnehmbar und an der Abscheidebasis 12 angebracht ist/anbringbar ist.

Einzelne im Vordergrund stehende Aspekte der hier eingereichten Beschreibung lassen sich damit kurz wie folgt zusammenfassen: Angegeben wird eine Abscheidevorrichtung 10 (Farbnebelabscheidevorrichtung 10). Diese umfasst eine Abscheidebasis 12 (Farbnebelabscheidebasisvorrichtung 12), einen Vorabscheider 14 (Farbnebelvorabscheidevorrichtung 14) und einen Träger 16 (Farbnebelabscheideträgervorrichtung 16). Die Abscheidebasis 12 ist zur Aufnahme zumindest einer Abscheidestufe (Farbnebelabscheidestufe) bestimmt und eingerichtet. Die Besonderheit besteht darin, dass der Vorabscheider 14 und der Träger 16 Teile der Abscheidebasis 12 umfassen (optional umfassen der Vorabscheider 14 oder der Träger 16 ausschließlich Teile des Rahmens, nochmals weiter optional umfassen der Vorabscheider 14 und der Träger 16 ausschließlich Teile des Rahmens). Der Träger 16 umfasst zwei mit der Abscheidebasis 12 verbundene oder an der Abscheidebasis 12 anbringbare/angebrachte Flügel 22, 24. Diese beiden Flügel 22, 24 sind aus einer ersten Oberfläche der Abscheidebasis 12 herauslösbar/ herausgelöst. Der Träger 16 entsteht durch das Herauslösen dieser beiden Flügel 22, 24 aus der ersten Oberfläche der Abscheidebasis 12. Der Vorabscheider 14 ist zum Beispiel an einer zweiten Oberfläche der Abscheidebasis 12 entnehmbar, insbesondere einer der ersten Oberfläche gegenüberliegenden zweiten Oberfläche. Der Vorabscheider 14 ist schließlich am Träger 16, nämlich an dessen Flügeln 22, 24, anbringbar und wird zur Verwendung zusammen mit der Abscheidebasis 12 dort angebracht und ist bei einer zur Verwendung hergerichteten Abscheidevorrichtung dort angebracht.

### Glossar

Abscheider = Abscheidevorrichtung = Farbnebelabscheidevorrichtung
Abscheidebasis = Farbnebelabscheidebasisvorrichtung Vorabscheider = Prallabscheider = Farbnebelvorabscheidevorrichtung
Träger = Stützstruktur = Trägervorrichtung = Farbnebelabscheideträgervorrichtung

### Bezugszeichenliste

- 10: Farbnebelabscheidevorrichtung, Abscheidevorrichtung
- 12: Farbnebelabscheidebasisvorrichtung, Abscheidebasisvorrichtung, Abscheidebasis
- 14: Farbnebelvorabscheidevorrichtung, Vorabscheidevorrichtung, Vorabscheider
- 16: Farbnebelabscheideträgervorrichtung, Abscheideträgervorrichtung, Träger, Stützstruktur
- 18: **--** frei --
- 20: Einströmöffnung (in der Farbnebelabscheidebasisvorrichtung)
- 22, 24: Flügel (Teil der Abscheidebasis; zum Erhalt der Stützstruktur)
- 26, 28: **--** frei -
- 30: Stecklasche (am Flügel; zum Einstecken in einen Schlitz in der Oberfläche des Vorabscheiders), Flügelstecklasche
- 32: Schlitz (in der Oberfläche des Vorabscheiders; zum Einstecken einer vom Flügel ausgehenden Stecklasche/Flügelstecklasche)
- 34: Stecklasche (am Vorabscheider; zum Einstecken in einen von der Einströmöffnung umfassten Einströmbereich)
- 36: Schlitz (in der Oberfläche des Vorabscheiders; setzt die Stecklasche am Vorabscheider von der restlichen Fläche des Vorabscheiders ab)
- 38: Nase (seitlich an der Stecklasche am Vorabscheider)
- 40: Einströmbereich (der Einströmöffnung)
- 42: Stütze (für den Vorabscheider)
- 44: Einschnitte (in dem Material zum Erhalt einer Abscheidebasis)
- 46: Öffnung (fungiert zum Beispiel als Ausströmöffnung)

## Patentansprüche

1. Farbnebelabscheidevorrichtung (10) umfassend
eine Farbnebelabscheidebasisvorrichtung (12),
eine Farbnebelvorabscheidevorrichtung (14) und
eine Farbnebelabscheideträgervorrichtung (16),
**dadurch gekennzeichnet,**
**dass** die Farbnebelabscheideträgervorrichtung (16) und die Farbnebelvorabscheidevorrichtung (14) Teile des zum Erhalt der Farbnebelabscheidebasisvorrichtung (12) bestimmten Materials umfassen,
**dass** die Farbnebelabscheideträgervorrichtung (16) zwei mit der Farbnebelabscheidebasisvorrichtung (12) verbundene oder an der Farbnebelabscheidebasisvorrichtung (12) anbringbare, aus einer ersten Oberfläche des zum Erhalt der Farbnebelabscheidebasisvorrichtung (12) bestimmten Materials herauslösbare Flügel (22, 24) umfasst, nämlich aus dem Material vollständig entnehmbare Flügel (22, 24) oder aus dem Material herausklappbare Flügel (22, 24),
**dass** die Farbnebelvorabscheidevorrichtung (14) an einer zweiten Oberfläche des zum Erhalt der Farbnebelabscheidebasisvorrichtung (12) bestimmten Materials entnehmbar ist,
**dass** ein Herausklappen der beiden Flügel (22, 24) eine Einströmöffnung (20) für den Eintritt eines Rohgasstroms in das Innere der Farbnebelabscheidebasisvorrichtung (12) und die Entnahme der Farbnebelvorabscheidevorrichtung (14) eine Ausströmöffnung für den Austritt des Rohgasstroms aus dem Inneren der Farbnebelabscheidebasisvorrichtung (12) freigibt
oder
**dass** ein vollständiges Entnehmen der beiden Flügel (22, 24) eine Einströmöffnung (20) oder eine Ausströmöffnung für den Ein- bzw. Austritt des Rohgasstroms und die Entnahme der Farbnebelvorabscheidevorrichtung (14) die jeweils andere Öffnung, nämlich die Aus- bzw. Einströmöffnung (20), freigibt
und **dass** die Farbnebelvorabscheidevorrichtung (14) an der Farbnebelabscheideträgervorrichtung (16) anbringbar ist.

2. Farbnebelabscheidevorrichtung (10) nach Anspruch 1,
wobei die beiden Flügel (22, 24) von einander gegenüberliegenden Rändern der Einströmöffnung (20) ausgehen.

3. Farbnebelabscheidevorrichtung (10) nach einem der vorangehenden Ansprüche,
wobei die beiden Flügel (22, 24) auch im herausgelösten und als Farbnebelabscheideträgervorrichtung (16) fungierenden Zustand einstückig und gelenkig mit der Farbnebelabscheidebasisvorrichtung (12) verbunden bleiben.

4. Farbnebelabscheidevorrichtung (10) nach einem der vorangehenden Ansprüche,
wobei die beiden Flügel (22, 24) jeweils an zumindest einer Kante eine Stecklasche (30) aufweisen,
wobei die Farbnebelvorabscheidevorrichtung (14) seitlich zwei Schlitze (32) aufweist und
wobei die Farbnebelvorabscheidevorrichtung (14) an der Farbnebelabscheideträgervorrichtung (16), nämlich an den beiden Flügeln (22, 24), anbringbar ist, indem die Stecklaschen (30) in die Schlitze (32) eingesteckt werden.

5. Farbnebelabscheidevorrichtung (10) nach Anspruch 4,
wobei die Flügel (22, 24) eine dreieckige Form oder eine Trapezform haben und wobei die Stecklaschen (30) von einer schrägen Kante der Flügel (22, 24) ausgehen.

6. Verfahren zum Herstellen einer Farbnebelabscheidevorrichtung (10) nach einem der vorangehenden Ansprüche,
wobei zum Erhalt der Farbnebelabscheideträgervorrichtung (16) die beiden Flügel (22, 24) aus der ersten Oberfläche des zum Erhalt der Farbnebelabscheidebasisvorrichtung (12) bestimmten Materials herausgelöst werden, nämlich aus dem Material vollständig entnommen oder aus dem Material herausgeklappt werden (22, 24),
wobei die Farbnebelvorabscheidevorrichtung (14) an der zweiten Oberfläche des zum Erhalt der Farbnebelabscheidebasisvorrichtung (12) bestimmten Materials entnommen wird,
wobei ein Herausklappen der beiden Flügel (22, 24) eine Einströmöffnung (20) für den Eintritt eines Rohgasstroms in das Innere der Farbnebelabscheidebasisvorrichtung (12) und die Entnahme der Farbnebelvorabscheidevorrichtung (14) eine Ausströmöffnung für den Austritt des Rohgasstroms aus dem Inneren der Farbnebelabscheidebasisvorrichtung (12) freigibt
oder
wobei ein vollständiges Entnehmen der beiden Flügel (22, 24) eine Einströmöffnung (20) oder eine Ausströmöffnung für den Ein- bzw. Austritt des Rohgasstroms und die Entnahme der Farbnebelvorabscheidevorrichtung (14) die jeweils andere Öffnung, nämlich die Aus- bzw. Einströmöffnung (20), freigibt
und wobei die Farbnebelvorabscheidevorrichtung (14) an den beiden Flügeln (22, 24) angebracht wird.

## Claims

1. A paint mist separation device (10) comprising
a paint mist separation base device (12),
a paint mist pre-separation device (14) and
a paint mist separation carrier device (16),
**characterized in that**
the paint mist separation carrier device (16) and the paint mist pre-separation device (14) comprise parts of the material intended for obtaining the paint mist separation base device (12),
**in that** the paint mist separation carrier device (16) comprises two wings (22, 24) that are detachable from a first surface of the material intended for obtaining the paint mist separation base device (12) and are connected to the paint mist separation base device (12) or can be attached to the paint mist separation base device (12), namely wings (22, 24) that can be completely removed from the material or wings (22, 24) that can be folded out of the material,
**in that** the paint mist pre-separation device (14) can be removed on a second surface of the material intended for obtaining the paint mist separation base device (12),
**in that** folding out the two wings (22, 24) opens an inflow opening (20) for a raw gas stream to enter the interior of the paint mist separation base device (12) and removing the paint mist pre-separation device (14) opens an outflow opening for the raw gas stream to exit the interior of the paint mist separation base device (12)
or
**in that** completely removing the two wings (22, 24) opens an inflow opening (20) or an outflow opening for the raw gas stream to enter or exit and removing the paint mist pre-separation device (14) opens the other opening, namely the outflow opening or inflow opening (20),
and **in that** the paint mist pre-separation device (14) can be attached to the paint mist separation carrier device (16).

2. The paint mist separation device (10) according to claim 1,
wherein the two wings (22, 24) start from opposing borders of the inflow opening (20).

3. The paint mist separation device (10) according to any of the preceding claims,
wherein, even in the detached state in which they act as the paint mist separation carrier device (16), the two wings (22, 24) remain connected to the paint mist separation base device (12) in an integral and articulated manner.

4. The paint mist separation device (10) according to any of the preceding claims,
wherein the two wings (22, 24) each comprise an insert tab (30) on at least one edge,
wherein the paint mist pre-separation device (14) comprises two slots (32) at the sides and
wherein the paint mist pre-separation device (14) can be attached to the paint mist separation carrier device (16), namely to the two wings (22, 24), by the insert tabs (30) being inserted into the slots (32).

5. The paint mist separation device (10) according to claim 4,
wherein the wings (22, 24) have a triangular shape or a trapezoidal shape and wherein the insert tabs (30) start from a sloped edge of the wings (22, 24).

6. A method for producing a paint mist separation device (10) according to any of the preceding claims,
wherein, to obtain the paint mist separation carrier device (16), the two wings (22, 24) are detached from the first surface of the material intended for obtaining the paint mist separation base device (12), namely are completely removed from the material or are folded out of the material (22, 24),
wherein the paint mist pre-separation device (14) is removed on the second surface of the material intended for obtaining the paint mist separation base device (12),
wherein folding out the two wings (22, 24) opens an inflow opening (20) for a raw gas stream to enter the interior of the paint mist separation base device (12) and removing the paint mist pre-separation device (14) opens an outflow opening for the raw gas stream to exit the interior of the paint mist separation base device (12)
or
wherein completely removing the two wings (22, 24) opens an inflow opening (20) or an outflow opening for the raw gas stream to enter or exit and removing the paint mist pre-separation device (14) opens the other opening, namely the outflow opening or inflow opening (20),
and wherein the paint mist pre-separation device (14) is attached to the two wings (22, 24).

## Revendications

1. Dispositif de séparation du brouillard de peinture (10) comprenant un dispositif de base de séparation du brouillard de peinture (12), un dispositif de pré-séparation du brouillard de peinture (14) et un dispositif support de séparation du brouillard de peinture (16), **caractérisé en ce**
**que** le dispositif support de séparation du brouillard de peinture (16) et le dispositif de pré-séparation du brouillard de peinture (14) comprennent des parties du matériau destiné à constituer le dispositif de base de séparation du brouillard de peinture (12),
en ce que le dispositif support de séparation du brouillard de peinture (16) comprend deux ailettes (22, 24) reliées au dispositif de base de séparation du brouillard de peinture (12) ou pouvant être fixées à celui-ci, lesdites ailettes pouvant être détachées d'une première surface du matériau destiné à constituer le dispositif de base de séparation du brouillard de peinture (12), à savoir soit des ailettes (22, 24) entièrement extractibles du matériau, soit des ailettes (22, 24) rabattables à partir de celui-ci,
en ce que le dispositif de pré-séparation du brouillard de peinture (14) peut être retiré d'une deuxième surface du matériau destiné à constituer le dispositif de base de séparation du brouillard de peinture (12),
en ce que, dans le cas où les deux ailettes (22, 24) sont rabattues, leur rabattement dégage une ouverture d'entrée (20) permettant l'admission d'un flux de gaz brut à l'intérieur du dispositif de base de séparation du brouillard de peinture (12), et le retrait du dispositif de pré-séparation du brouillard de peinture (14) dégage une ouverture de sortie permettant l'évacuation du flux de gaz brut depuis l'intérieur du dispositif de base de séparation du brouillard de peinture (12)
ou
en ce que dans le cas où les deux ailettes (22, 24) sont entièrement retirées, leur retrait dégage une ouverture d'entrée (20) ou une ouverture de sortie permettant respectivement l'admission ou l'évacuation du flux de gaz brut, et le retrait du dispositif de pré-séparation du brouillard de peinture (14) dégage l'autre ouverture respectivement, à savoir l'ouverture de sortie ou l'ouverture d'entrée (20)
et en ce que le dispositif de pré-séparation du brouillard de peinture (14) peut être fixé au dispositif support de séparation du brouillard de peinture (16).

2. Dispositif de séparation du brouillard de peinture (10) selon la revendication 1,
dans lequel les deux ailettes (22, 24) s'étendent à partir de bords opposés de l'ouverture d'entrée (20).

3. Dispositif de séparation du brouillard de peinture (10) selon l'une des revendications précédentes,
dans lequel les deux ailettes (22, 24) restent reliées d'un seul tenant et de manière articulée au dispositif de base de séparation du brouillard de peinture (12), même lorsqu'elles sont détachées et font office de dispositif support de séparation du brouillard de peinture (16).

4. Dispositif de séparation du brouillard de peinture (10) selon l'une des revendications précédentes,
dans lequel chacune des deux ailettes (22, 24) comporte, sur au moins un bord, une languette d'emboîtement (30),
dans lequel le dispositif de pré-séparation du brouillard de peinture (14) comporte deux fentes latérales (32) et
dans lequel le dispositif de pré-séparation du brouillard de peinture (14) peut être fixé au dispositif support de séparation du brouillard de peinture (16), à savoir aux deux ailettes (22, 24), par insertion des languettes d'emboîtement (30) dans les fentes (32).

5. Dispositif de séparation du brouillard de peinture (10) selon la revendication 4,
dans lequel les ailettes (22, 24) présentent une forme triangulaire ou trapézoïdale et dans lequel les languettes d'emboîtement (30) s'étendent à partir d'un bord oblique des ailettes (22, 24).

6. Procédé de fabrication d'un dispositif de séparation du brouillard de peinture (10) selon l'une des revendications précédentes,
dans lequel, pour obtenir le dispositif support de séparation du brouillard de peinture (16), les deux ailettes (22, 24) sont détachées de la première surface du matériau destiné à constituer le dispositif de base de séparation du brouillard de peinture (12), à savoir soit entièrement retirées du matériau, soit rabattues à partir de celui-ci (22, 24),
dans lequel le dispositif de pré-séparation du brouillard de peinture (14) est retiré de la deuxième surface du matériau destiné à constituer le dispositif de base de séparation du brouillard de peinture (12),
dans lequel, lorsque les deux ailettes (22, 24)sont rabattues, leur rabattement dégage une ouverture d'entrée (20) permettant l'admission d'un flux de gaz brut à l'intérieur du dispositif de base de séparation du brouillard de peinture (12), et le retrait du dispositif de pré-séparation du brouillard de peinture (14) dégage une ouverture de sortie permettant l'évacuation du flux de gaz brut depuis l'intérieur du dispositif de base de séparation du brouillard de peinture (12)
ou
dans lequel, lorsque les deux ailettes (22, 24) sont entièrement retirées, leur retrait dégage une ouverture d'entrée (20) ou une ouverture de sortie permettant respectivement l'admission ou l'évacuation du flux de gaz brut, et le retrait du dispositif de pré-séparation du brouillard de peinture (14) dégage l'autre ouverture respectivement, à savoir l'ouverture de sortie ou l'ouverture d'entrée (20),
et dans lequel le dispositif de pré-séparation du brouillard de peinture (14) est fixé aux deux ailettes (22, 24).
